# EUROPEAN PATENT APPLICATION

(11) **EP 4 679 770 A1**
(43) Date of publication of application: **14.01.2026**
(21) Application number: 23952601.5
(22) Date of filing: 20.09.2023
(51) Int. Cl.: H04L 9/40, H04L 45/247

(54) **SECURITY TABLE ENTRY SWITCHING METHOD AND APPARATUS, NETWORK DEVICE AND STORAGE MEDIUM**

(71) Applicant: New H3C Technologies Co., Ltd., Hangzhou, Zhejiang 310052 (CN)
(72) Inventor: LIN, Changwang, Beijing 100102 (CN)
(74) Representative: IPAZ
(86) International application number: PCT/CN2023/120186
(87) International publication number: WO 2025/059941

(57) **Abstract**

The embodiments of the present application relate to the technical field of communications. Provided are a security table entry switching method and apparatus, a network device and a storage medium, The method is applied to a data plane of a network device, wherein the network device comprises a first security table entry, the first security table entry comprises an identifier of a first interface and a first source prefix, the first security table entry corresponds to a standby path leading to a destination end, and the state of the first security table entry is a standby state. The method comprises: if a message having the first source prefix has been received by means of the first interface, changing the state of the first security table entry into a temporary active state; if an update instruction for a control plane has not been received within a first preset duration, changing the state of the first security table entry into the standby state; and if the update instruction for the control plane has been received within the first preset duration, changing the state of the first security lable entry into an active state on the basis of the update instruction. Thus, the FRR convergence speed can be improved while preventing security vulnerabilities.

## Description

### Technical Field

The present disclosure relates to the technical field of communications, in particular to a method and an apparatus for security table entry switching, a network device, and a storage medium.

### Background

In Source Address Validation Networks (SAVNET), after receiving a packet, each node can use a Source Address Validation (SAV) table entry to verify the legality of the packet. If there is a SAV table entry corresponding to the source address and incoming interface of the packet, it is determined that the packet is legal and then is processed normally. Otherwise, it is determined that the packet is illegal and shall be discarded.

In the case that there are a main path and a backup path between two nodes, the SAV table entry corresponding to the backup path is in an inactivated state by default, which is not to verify packet legality. In the Fast Reroute (FRR) scenario, when it is necessary to switch between the main and backup paths, if the SAV table entry corresponding to the backup path is not activated in a timely manner, it will lead to a decrease in the switching convergence performance of FRR. If the SAV table entry corresponding to the backup path is activated too early, it will lead to a security vulnerability in the backup path.

### Summary

The purpose of examples in the present disclosure is to provide a method and an apparatus for security table entry switching, a network device, and a storage medium to improve the convergence speed of FRR while preventing security vulnerabilities. The specific technical solution is as follows.

In the first aspect, the example of the present disclosure provides a method for security table entry switching, which is applied to a data plane of a network device, wherein the network device comprises a first security table entry, comprising an identifier of a first interface and a first source prefix; the first security table entry corresponds to a backup path to a destination terminal, and a state of the first security table entry is a backup state; the method comprises:
if a packet with the first source prefix is received through the first interface, changing the state of the first security table entry to a temporary main state;
if no update instruction is received from a control plane within a first preset duration, changing the state of the first security table entry to the backup state;
if an update instruction is received from the control plane within the first preset duration, changing the state of the first security table entry to a main state based on the update instruction.

In one possible example, the network device further comprises a second security table entry, comprising an identifier of a second interface and a second source prefix; the second security table entry corresponds to a main path to the destination terminal, and a state of the second security table entry is the main state; before changing the state of the first security table entry to the temporary main state if the packet with the first source prefix is received through the first interface, the method further comprises:
monitoring whether the second interface receives a packet with the second source prefix;
if the second interface does not receive the packet with the second source prefix for a second preset duration, monitoring whether the first interface receives the packet with the first source prefix;
wherein the second source prefix is the same with or different from the first source prefix.

In one possible example, the network device further comprises a second security table entry, comprising an identifier of a second interface and a second source prefix, wherein the second security table entry corresponds to a main path to the destination terminal, and a state of the second security table entry is a main state; the method further comprises:
if a link failure is detected between the second interface and a previous hop network device in the main path, changing the state of the first security table entry to the main state, and changing the state of the second security table entry to the backup state.

In one possible example, the first security table entry comprises a main and backup state field, a value of the main and backup state field of the first security table entry is a first value by default, and the first value is to represent the backup state.

In one possible example, the second security table entry comprises a main and backup state field, a value of the main and backup state field of the second security table entry is a second value by default, and the second value is to represent the main state.

In the second aspect, the example of the present disclosure provides an apparatus for security table entry switching, which is applied to a data plane of a network device, wherein the network device comprises a first security table entry, comprising an identifier of a first interface and a first source prefix; the first security table entry corresponds to a backup path to a destination terminal, and a state of the first security table entry is a backup state; the apparatus comprises:
a changing module to: if a packet with the first source prefix is received through the first interface, change the state of the first security table entry to a temporary main state;
wherein, the changing module is further to: if no update instruction is received from a control plane within a first preset duration, change the state of the first security table entry to the backup state;
the changing module is further to: if an update instruction is received from the control plane within the first preset duration, change the state of the first security table entry to a main state based on the update instruction.

In one possible example, the network device further comprises a second security table entry, comprising an identifier of a second interface and a second source prefix; the second security table entry corresponds to a main path to the destination terminal, and a state of the second security table entry is the main state; the apparatus further comprises a monitoring module;
the monitoring module is to monitor whether the second interface receives a packet with the second source prefix; and if the second interface does not receive the packet with the second source prefix for a second preset duration, monitor whether the first interface receives the packet with the first source prefix;
wherein, the second source prefix is the same with or different from the first source prefix.

In one possible example, the network device further comprises a second security table entry, comprising an identifier of a second interface and a second source prefix, wherein the second security table entry corresponds to a main path to the destination terminal, and a state of the second security table entry is a main state;
the changing module is further to: if a link failure is detected between the second interface and a previous hop network device in the main path, change the state of the first security table entry to the main state, and change the state of the second security table entry to the backup state.

In one possible example, the first security table entry comprises a main and backup state field, a value of the main and backup state field of the first security table entry is a first value by default, and the first value is to represent the backup state.

In one possible example, the second security table entry comprises a main and backup state field, a value of the main and backup state field of the second security table entry is a second value by default, and the second value is to represent the main state.

In the third aspect, the example of the present disclosure provides a network device comprising a first security table entry, wherein the first security table entry comprises an identifier of a first interface and a first source prefix; the first security table entry corresponds to a backup path to a destination terminal, and a state of the first security table entry is a backup state; the network device comprises:
a processor;
a transceiver;
a machine readable storage medium having stored therein machine executable instructions that can be executed by the processor; wherein the machine executable instructions cause the processor to:
   if a packet with the first source prefix is received through the first interface, change the state of the first security table entry to a temporary main state;
   if no update instruction is received from a control plane within a first preset duration, change the state of the first security table entry to the backup state;
   if an update instruction is received from the control plane within the first preset duration, change the state of the first security table entry to a main state based on the update instruction.

In one possible example, the network device further comprises a second security table entry, comprising an identifier of a second interface and a second source prefix; the second security table entry corresponds to a main path to the destination terminal, and a state of the second security table entry is the main state; the machine executable instructions further cause the processor to:
monitor whether the second interface receives a packet with the second source prefix;
if the second interface does not receive the packet with the second source prefix for a second preset duration, monitor whether the first interface receives the packet with the first source prefix;
wherein the second source prefix is the same with or different from the first source prefix.

In one possible example, the network device further comprises a second security table entry, comprising an identifier of a second interface and a second source prefix, wherein the second security table entry corresponds to a main path to the destination terminal, and a state of the second security table entry is a main state; the machine executable instructions further cause the processor to:
if a link failure is detected between the second interface and a previous hop network device in the main path, change the state of the first security table entry to the main state, and change the state of the second security table entry to the backup state.

In one possible example, the first security table entry comprises a main and backup state field, a value of the main and backup state field of the first security table entry is a first value by default, and the first value is to represent the backup state.

In one possible example, the second security table entry comprises a main and backup state field, a value of the main and backup state field of the second security table entry is a second value by default, and the second value is to represent the main state.

In the fourth aspect, the example of the present disclosure provides a machine readable storage medium having stored therein machine executable instructions that, when called and executed by a processor, cause the processor to carry out the method described in the first aspect.

In the fifth aspect, the example of the present disclosure provides a computer program product, which causes a processor to carry out the method described in the first aspect.

Using the above technical solution, if a packet with the first source prefix is received through the first interface, it means that the traffic is switched to the backup path possibly due to a fault in the main path. Therefore, the state of the first security table entry is changed to a temporary main state, which can prevent the traffic from being mistakenly intercepted due to that the security table entry corresponding to the backup path fail to take into effect in a timely manner. In the case that there is a need for main and backup switching, FRR can quickly converge. If no update instruction is not received from the control plane within the first preset duration, the state of the first security table entry is changed to the backup state, which can prevent security vulnerabilities caused by the security table entry corresponding to the backup path being in an effective state for a long time. If an update instruction is received within the first preset duration, the state of the first security table entry is changed to a main state based on the update instruction. In this way, it not only ensures that the first security table entry corresponding to the backup path takes into effect in advance when switching between the main and backup paths, and improves the convergence efficiency of FRR switching, but also avoids security vulnerabilities caused by the security table entry corresponding to the backup path being in an effective state for a long time, balancing FRR efficiency and network security.

### Brief Description of the Drawings

The drawings described here are intended to provide a further understanding of the present disclosure and form a part of the present disclosure. The illustrative examples and their explanations of the present disclosure are to explain the present disclosure and do not constitute an improper limitation on the present disclosure.
Figure 1 is an exemplary schematic diagram of the process of a network being attacked by an attacking host in the prior art;
Figure 2 is a schematic diagram of a process for implementing SANET technology provided in an example of the present disclosure;
Figure 3 is an exemplary schematic diagram of a source prefix advertisement method provided in the example of the present disclosure;
Figure 4 is an exemplary schematic diagram of a path detection method provided in the example of the present disclosure;
Figure 5 is an exemplary schematic diagram of an application scenario provided in the example of the present disclosure;
Figure 6 is a flowchart of a method for security table entry switching provided in the example of the present disclosure;
Figure 7 is a schematic structural diagram of an apparatus for security table entry switching provided in the example of the present disclosure;
Figure 8 is a schematic structural diagram of a network device provided in the example of the present disclosure.

### Detailed Description

The purpose, the technical solutions and advantages the present disclosure will be described clearly and completely with reference to the drawings and the examples of the present disclosure. Apparently, the described examples are only some, but not all, of the examples of the present disclosure. All other examples obtained by those skilled in the art based on the examples in the present disclosure fall within the protection scope of the present disclosure.

In communication networks, network devices forward packets based on the destination addresses of the packets, without verifying the authenticity of the source addresses of the forwarded packets. This allows attackers to attack the network by forging the source addresses, resulting in a large number of network security issues.

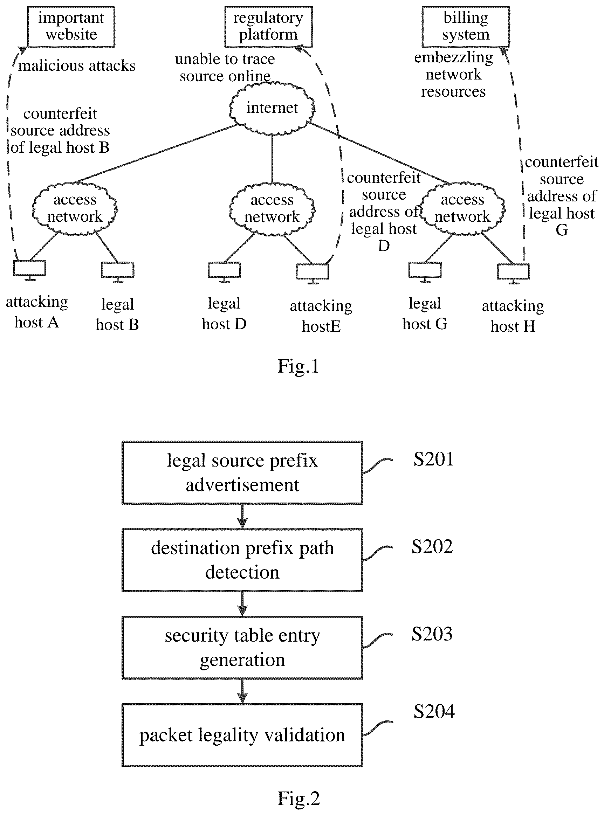

As shown in Figure 1, each host can access the Internet through an access network. For example, attacking host A can counterfeit the source address of legal host B and maliciously attack important websites, causing the important websites to be unable to be accessed normally and interfering with legal users' use of important business. Attacking host E can counterfeit the source address of legal host D to access the Internet for illegal network behavior, and the attacker can conceal his/her true identity and location, resulting in regulatory platforms being unable to trace the source of illegal network behavior online. For example, attacking host H can counterfeit the source address of legal host G and steal network resources, thereby interfering with the billing system's billing, management, and security authentication on the real source address, resulting in a large number of network resources being stolen.

In order to solve illegal attacks based on source addresses, SAVNET technology is proposed, as shown in Figure 2. The example methods of SANET technology comprise:
Block S201, legal source prefix advertisement.

The originating node connected to the user side network can use the network prefix of the user side network, to which the originating node is connected, as the legal source prefix, and then encapsulate the legal source prefix in the Source Prefix Advertisement (SPA) packet to advertise it to other nodes in the domain in a flood form, so that all nodes in the domain can learn the legal source prefix of the user side network.

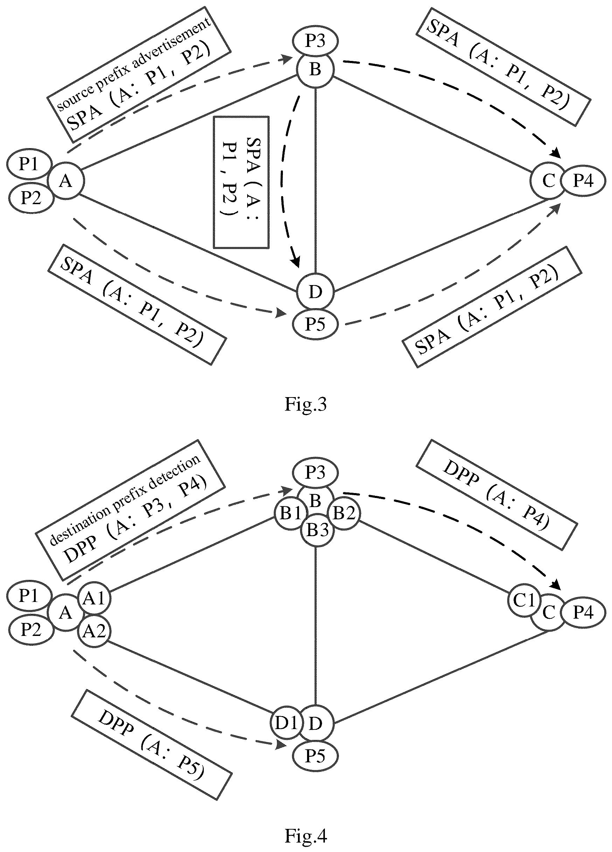

As shown in Figure 3, node A to node D are exemplary shown in Figure 3, where the network prefixes of the user side networks connected to node A are source prefixes P1 and P2, the network prefix of the user side network connected to node B is source prefix P3, the network prefix of the user side network connected to node C is source prefix P4, and the network prefix of the user side network connected to node D is source prefix P5. The legal source prefixes determined by originating node A are P1 and P2. Originating node A encapsulates the legal source prefixes in the SPA packet, and then advertises them in a flood form to the relay nodes in the domain, namely node B, node C, and node D. In Figure 3, the SPA packet is represented as SPA (A: P1, P2).

### At block S202, destination prefix path detection.

The originating node and each relay node can complete the detection of a forwarding path to the specified destination prefix by transmitting a Destination Prefix Probing (DPP) packet.

Taking originating node A as an example, originating node A generates a DPP packet based on the locally recorded router table information and sends it to the next hop node through an outgoing interface. The next hop node is the next hop node corresponding to the destination prefix in the router table. The DPP packet comprises the router ID of the originating node and a set of all destination prefixes that the outgoing interface can reach.

As shown in Figure 4, the network prefixes of the user side networks connected to originating node A are P1 and P2, and originating node A determines that the network prefixes P1 and P2 are legal prefixes. The network prefix of the user side network connected to relay node B is P3, while the network prefix of the user side network connected to relay node C is P4. The network prefix of the user side network connected to relay node D is P5. The originating node A has interfaces A1 and A2, relay node B has interfaces B1, B2, and B3, relay node C has an interface C1, and relay node D has an interface D1.

Table 1-1 shows the router table in originating node A:

**Table 1-1**

| Router table for originating node A (Router Table for A) | | |
|---|---|---|
| Destination prefix | Outgoing interface | Next hop |
| P3 | A1 | B |
| P4 | A1 | B |
| P5 | A2 | D |

Table 1-2 shows the router table in relay node B:

**Table 1-2**

| Router table for relay node B (Router Table for B) | | |
|---|---|---|
| Destination prefix | Outgoing interface | Next hop |
| P4 | B2 | C |
| P5 | B3 | D |

The originating node can look up the router table, which is Table 1-1 above. Based on the router table, it is determined that the destination prefixes that outgoing interface A1 can reach are P3 and P4, and the next hop corresponding to A1 is relay node B. Assuming the Router ID of originating node A is A, the DPP packet generated by originating node A can be represented as DPP (A: P3, P4). Originating node A sends the generated DPP packet to relay node B through outgoing interface A1.

Moreover, originating node A determines from Table 1-1 that the destination prefix that interface A2 can reach is P5, and the next hop corresponding to A2 is relay node D. Assuming the Router ID of originating node A is A, the DPP packet generated by originating node A can be represented as DPP (A: P5). Originating node A sends the generated DPP packet to relay node D through outgoing interface A2.

After receiving the DPP packet sent by the originating node A, relay node B searches for the outgoing interface and next hop corresponding to the destination prefix P4 in the router table shown in Tables 1-2 based on the destination prefix P4 carried in the DPP packet. The found outgoing interface is B2, and the next hop is relay node C. Then, based on the Router ID in the received DPP packet, the found outgoing interface and next hop, relay node B generates a DPP packet, which can be represented as DPP (A: P4), and relay node B sends the generated DPP packet to relay node C through outgoing interface B2.

### At block S203, security table entry generation.

Each relay node will search locally for a SPA packet with the same Router ID as the received DPP packet, bind the legal source prefix in the found SPA packet with the incoming interface of the received DPP packet to generate the corresponding security table entry of each relay node, that is, SAV table entry. The SAV table entry comprises the correspondence between a legal source prefix and an incoming interface.

Taking Figure 4 as an example, the relay node B, relay node C and relay node D, after receiving the DPP packet sent by originating node A, compare it with the received SPA packets recorded locally to see if there is a SPA packet with the same Router ID as the received DPP packet; and if there is, bind the legal source prefix in the SPA packet and the incoming interface receiving the DPP packet to generate a SAV table entry. The SAV table entry is the security table entry described above.

SAV table entries generated by relay nodes B, C and D are shown in Table 2-1 to 2-3:

**Table 2-1**

| Source address validation table entry for relay node B (SAVNET Table for B) | |
|---|---|
| Legal source prefix | Incoming interface |
| P1, P2 | B1 |

**Table 2-2**

| Source address validation table entry for relay node C (SAVNET Table for C) | |
|---|---|
| Legal source prefix | Incoming interface |
| P1, P2 | C1 |

**Table 2-3**

| Source address validation table entry for relay node D (SAVNET Table for D) | |
|---|---|
| Legal source prefix | Incoming interface |
| P1, P2 | D1 |

At block S204, packet legality validation.

Understandably, when each relay node receives a packet, it can verify the legality of the packet based on the SAV table entry. The relay node can determine the incoming interface receiving the packet and the source prefix of the source IP address of the packet. If there is a correspondence between the incoming interface and the source prefix in the SAV table entry, the relay node determines that the packet is legal and forwards the packet. Otherwise, it is determined that the packet is illegal and discards the packet.

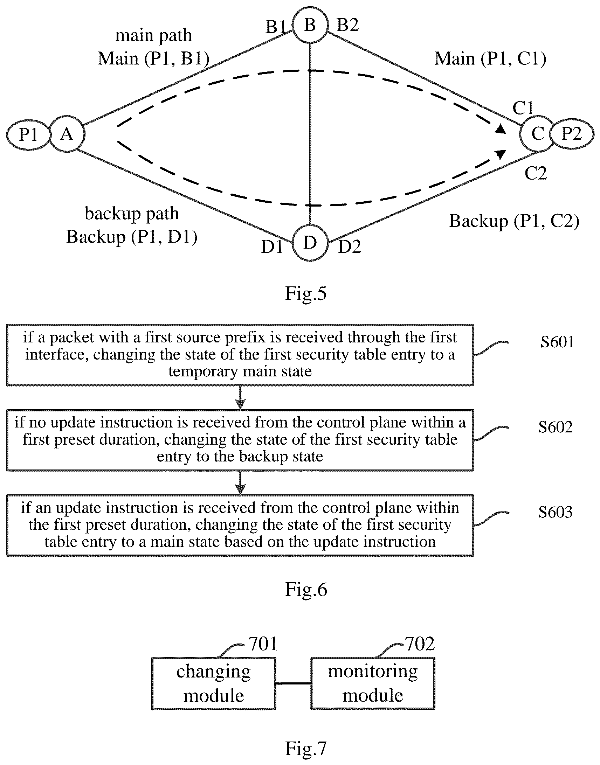

In the scenario where there are a main path and a backup path between nodes, as shown in Figure 5, Figure 5 exemplarily shows an originating node A and three relay nodes, which are relay node B, relay node C, and relay node D.

The network prefix of the user side network connected to originating node A is P1, and the network prefix of the user side network connected to relay node C is P2. Relay node B has interfaces B1 and B2, relay node C has interfaces C1 and C2, and relay node D has interfaces D1 and D2.

The main path (Main) is a forwarding path between the originating node A, relay node B and relay node C, and the backup path is a forwarding path between the originating node A, relay node D and relay node C.

The path between the originating node A and the interface B1 of the relay node B belongs to the main path, which can be represented as Main (P1, B1) in Figure 5 by using the network prefix and the interface. The path between the interface B2 of the relay node B and the interface C1 of the relay node C is also the main path, which can be represented as Main (P1, C1) in Figure 5 by using the network prefix and the interface.

The path between the originating node A and the interface D1 of the relay node D belongs to the backup path, which can be represented as Backup (P1, D1) in Figure 5 by using the network prefix and the interface. The path between the interface D2 of the relay node D and the interface C2 of the relay node C is the backup path, which can be represented as Backup (P1, C2) in Figure 5 by using the network prefix and the interface.

In the process of using the main path for communications, the SAV table entries corresponding to the backup path in relay node C and the SACNET table entries corresponding to the backup path in relay node D are not in effect.

If relay node C receives a packet with source prefix P1 through interface C2, it will determine the packet as an illegal packet. Similarly, if relay node D receives a packet with source prefix P1 through interface D1, it will determine the packet as an illegal packet.

However, how to make the FRR converge quickly in the FRR scenario while ensuring network security if the main path fails is an urgent problem to be solved.

In order to solve the above problems, the example of the present disclosure provides a method for security table entry switching, which is applied to a data plane of a network device. The network device comprises a first security table entry, comprising a first interface identifier and a first source prefix; the first security table entry corresponds to a backup path to a destination terminal, and the state of the first security table entry is a backup state. As shown in Figure 6, the method comprises blocks S601-S603.

At block S601, if a packet with a first source prefix is received through the first interface, changing the state of the first security table entry to a temporary main state.

The first security table entry can comprise one or more source prefixes. If the source address of the packet received through the first interface matches any source prefix comprised in the first security table entry, it means that a packet from the backup path has been received through the first interface, then the state of the first security table entry is changed to the temporary main state.

It can be understood that the first security table entry is a security table entry corresponding to the backup path, so it is in an ineffective state by default. After changing the state of the first security table entry to the temporary main state, the first security table entry is activated, that is, in an effective state, and then the network device can identify the packet matching the first security table entry as a legal packet.

At block S602, if no update instruction is received from the control plane within a first preset duration, changing the state of the first security table entry to the backup state.

The first preset duration is a pre-configured expiring duration of the temporary main state, and the specific value can be configured according to experience.

Start timing after changing the state of the first security table entry to the temporary main state. If the timing duration reaches the first preset duration, and no update instruction is received from the control plane of the network device, it indicates that the network device does not switch between the main and backup paths, then the state of the first security table entry will be restored to the backup state, so that the first security table entry will be restored to the inactivated state.

At block S603, if an update instruction is received from the control plane within the first preset duration, changing the state of the first security table entry to a main state based on the update instruction.

The update instruction is to indicate the main and backup switching. If an update instruction is received from the control plane within the first preset duration, it indicates that the control plane has determined that the main and backup switching is required, and then the state of the first security table entry can be changed to the main state according to the update instruction.

The mode of main and backup switching by the control plane can refer to the example of FRR technology, which is not limited in the example of the application.

Using this method, if a packet with the first source prefix is received through the first interface, it means that the traffic is switched to the backup path possibly due to a fault in the main path. Therefore, the state of the first security table entry is changed to the temporary main state, which can prevent the traffic from being mistakenly intercepted due to that the security table entry corresponding to the backup path fail to take into effect in a timely manner. In the case that there is a need for main and backup switching, FRR can quickly converge. If no update instruction is not received from the control plane within the first preset duration, the state of the first security table entry is changed to the backup state, which can prevent security vulnerabilities caused by the security table entry corresponding to the backup path being in an effective state for a long time. If an update instruction is received within the first preset duration, the state of the first security table entry is changed to a main state based on the update instruction. In this way, it not only ensures that the first security table entry corresponding to the backup path takes into effect in advance when switching between the main and backup paths, and improves the convergence efficiency of FRR switching, but also avoids security vulnerabilities caused by the security table entry corresponding to the backup path being in an effective state for a long time, balancing FRR efficiency and network security.

In some examples of the present disclosure, the network device further comprises a second security table entry, comprising an interface identifier of a second interface and a second source prefix; the second security table entry corresponds to a main path to the destination terminal, and the state of the second security table entry is the main state. On this basis, before block S601 i.e. before changing the state of the first security table entry to the temporary main state if the packet with the first source prefix is received through the first interface, the method further comprises:
monitoring whether the second interface receives a packet with the second source prefix, if the second interface does not receive a packet with the second source prefix for a second preset duration, monitoring whether the first interface receives a packet with the first source prefix.

The second security table entry can comprise one or more source prefixes. If no packet with the source prefix comprised in the second security table entry is received for a second preset duration, it indicates that there may be a fault in the main path. The second security table entry comprises the same source prefix as the first security table entry, for example, both the first and second security table entries comprise source prefixes P1 and P2.

The first source prefix is the same with or different from the second source prefix, which can be understood as the source prefixes of the packets received through the main and backup paths are the same or different before and after the main path failure.

For example, before the main path fails, the main path receives a packet with the source prefix P1; after the main path fails, the backup path receives a packet with the source prefix P1. In this case, the first source prefix and the second source prefix are different.

For another example, before the main path fails, the main path receives a packet with the source prefix P1; after the main path fails, the backup path receives a packet with the source prefix P2. In this case, the first source prefix and the second source prefix are different.

The second preset duration can be preset based on experience, for example, it can be 30 milliseconds.

If the second interface does not receive a packet with the second source prefix for the second preset duration, it indicates that there may be a remotely fault in the main path. Therefore, network devices can further monitor whether the first interface has received a packet with the first source prefix. If the first interface receives a packet with the first source prefix at this time, it indicates that FRR may be currently in progress, that is, the remote device in the main path has already switched traffic to the backup path, but the network device where the first interface is located has not yet completed the main and backup switching. At this time, the state of the first security table entry can be set to a temporary main state to avoid false interception of business traffic.

For example, the first security table entry comprises the source prefix P1 and interface 1, and the second security table entry comprises the source prefix P1 and interface 2.

If the network device does not receive a packet with source prefix P1 through interface 2 for the second preset duration, but receives a packet with source prefix P1 through interface 1, change the state of the first security table entry to temporary main state.

For another example, the first security table entry comprises the source prefix P1, P2 and interface 1, and the second security table entry comprises the source prefix P1, P2 and interface 2.

If the network device does not receive a packet with source prefix P1 or a packet with source prefix P2 through interface 2 for the second preset duration, but receives a packet with source prefix P1 or P2 through interface 1, change the state of the first security table entry to the temporary main state.

In some examples of the present disclosure, in the case where the network device comprises a second security table entry, the method further comprises:
if a link failure is detected between the second interface and a previous hop network device in the main path, updating the state of the first security table entry to the main state, and changing the state of the second security table entry to the backup state.

The network devices can use direct connection fault detection technology to detect whether there is a direct connection fault in the link between the main path and the previous hop device. As an example, this direct fault detection technology can be Bidirectional Forwarding Detection (BFD). If there is a direct connection failure in a link between the network device and the previous hop device, it indicates that FRR will be carried out in the future. Therefore, the network device can directly update the state of the first security table entry to the main state, making the first security table entry effective immediately. This can avoid false interception of business traffic and improve the convergence speed of FRR.

In the example of the present disclosure, the first security table entry comprises a main and backup state field, the value of the main and backup state field of the first security table entry is a first value by default, and the first value is to represent the backup state.

The second security table entry comprises a main and backup state, the value of the main and backup state field of the second security table entry is a second value by default, and the second value is to represent the main state.

That is to say, in the example of the present disclosure, on the basis of the original SAV table entry, the main and backup state field is added, so that the SAV table entry include a source prefix field, an incoming interface field, and the main and backup state field.

Taking Figure 5 as an example, the network device in the above example can be node C or node D in Figure 5.

The SAV table entries for node C in Figure 5 are shown in Table 3-1, the SAV table entries for node B are shown in Table 3-2, and the SAV table entries for node D are shown in Table 3-3. The field values in following three tables are only examples, and the representation of each field value is not limited in the examples of the present disclosure. For example, in following three tables, the first value is exemplified as "backup" and the second value is exemplified as "main". In practical example, binary numbers can also be to distinguish between main and backup states, such as "0" indicating the backup state and "1 " indicating the main state.

**Table 3-1**

| Source address validation table entry for node C (SAV ENTRY for C) | | |
|---|---|---|
| Source prefix | Incoming interface | Main and backup state |
| P1 | C1 | Main |
| P1 | C2 | Backup |

**Table 3-2**

| Source address validation table entry for node B (SAV ENTRY for B) | | |
|---|---|---|
| Source prefix | Incoming interface | Main and backup state |
| P1 | B1 | Main |

**Table 3-3**

| Source address validation table entry for node D (SAV ENTRY for D) | | |
|---|---|---|
| Source prefix | Incoming interface | Main and backup state |
| P1 | D1 | Backup |

From Table 3-1, it can be seen that node C has both main and backup SAV entries, and node C can initiate fault detection. This fault detection includes using direct connection fault detection technology to detect whether there is a fault in the link between node C and node B, as well as starting a timer to detect the interface traffic of interface C1.

If node C detects a direct connection fault with node B, the second table entry in Table 3-1 can be updated to the main state and the first table entry in Table 3-1 can be updated to the backup state. Furthermore, if node C receives a packet with the source prefix P1 through interface C2, it can release the packet.

If node C does not detect a direct connection fault, but detects that interface C1 has not received traffic with source prefix P1 within 30ms, and interface C2 receives traffic with source prefix P1, then node C can determine that there may be a fault remotely in the main path. The second table entry in Table 3-1 can be changed to a temporary main state, which means activating the table entry for a period of time to ensure that traffic is not intercepted.

After changing the second table entry in Table 3-1 to the temporary main state, if the activation time expires and no update instruction indicating main and backup switching is received, the second table entry is changed to the backup state and the traffic with source prefix P1 received through interface C2 will be stopped to avoid security vulnerabilities. If an update instruction indicating main and backup switching is received before the activation time expires, the second table entry in Table 3-1 is updated to the main state and the first table entry in Table 3-1 is updated to the backup state.

In addition, from Table 3-3, it can be seen that node D is only configured with a backup SAV table entry. If node D receives a packet with source prefix P1 on interface D1, update the table entry in Table 3-3 to a temporary main state, that is, activate the table entry for a period of time to ensure that traffic is not intercepted.

After changing the table entry to the temporary main state, if the activation time expires and no update instruction indicating main and backup switching is received, the table entry is changed to the backup state and the traffic with source prefix P1 received through interface D1 will be stopped to avoid security vulnerabilities. If an update instruction indicating main and backup switching is received before the activation time expires, update the table entry to the main state.

Taking intra domain communications as an example in Figure 5, the method provided in the example of the present disclosure is also applicable to inter domain communications.

Based on the same concept, the example of the present disclosure provides an apparatus for security table entry switching, which is applied to a data plane of a network device, wherein the network device comprises a first security table entry, comprising an identifier of a first interface and a first source prefix; the first security table entry corresponds to a backup path to a destination terminal, and the state of the first security table entry is a backup state. As shown in Figure 7, the apparatus comprises:
a changing module 701: if a packet with the first source prefix is received through the first interface, change the state of the first security table entry to a temporary main state;
wherein, the changing module 701 is further to: if no update instruction is received from a control plane within a first preset duration, change the state of the first security table entry to the backup state;
the changing module 701 is further to: if an update instruction is received from the control plane within the first preset duration, update the state of the first security table entry to a main state based on the update instruction.

Optionally, the network device further comprises a second security table entry, comprising an identifier of a second interface and a second source prefix; the second security table entry corresponds to a main path to the destination terminal, and a state of the second security table entry is the main state. As shown in Figure 7, the apparatus further comprises a monitoring module 702:
the monitoring module 702 is to monitor whether the second interface receives a packet with the second source prefix; and if the second interface does not receive the packet with the second source prefix for a second preset duration, monitor whether the first interface receives the packet with the first source prefix;
wherein, the second source prefix is the same with or different from the first source prefix.

Optionally, the network device further comprises a second security table entry, comprising an identifier of a second interface and a second source prefix, wherein the second security table entry corresponds to a main path to the destination terminal, and a state of the second security table entry is a main state; the changing module 701 is further to: if a link failure is detected between the second interface and a previous hop network device in the main path, change the state of the first security table entry to the main state, and change the state of the second security table entry to the backup state.

Optionally, the first security table entry comprises a main and backup state field, a value of the main and backup state field of the first security table entry is a first value by default, and the first value is to represent the backup state.

Optionally, the second security table entry comprises a main and backup state field, a value of the main and backup state field of the second security table entry is a second value by default, and the second value is to represent the main state.

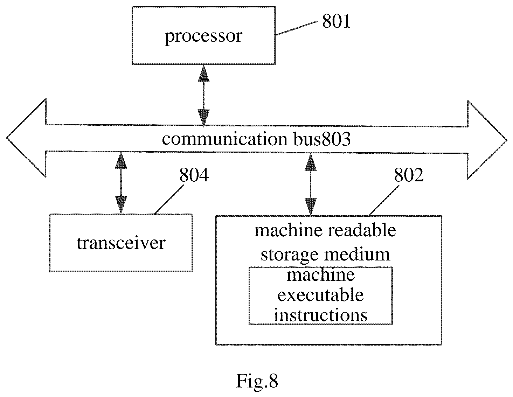

Based on the same concept, the example of the present disclosure also provides a network device comprising a first security table entry, wherein the first security table entry comprises an identifier of a first interface and a first source prefix; the first security table entry corresponds to a backup path to a destination terminal, and a state of the first security table entry is a backup state. As shown in Figure 8, the network device comprises:
a processor 801; a transceiver 804; a machine readable storage medium 802 having stored therein machine executable instructions that can be executed by the processor 801; wherein the machine executable instructions cause the processor 801 to:
if a packet with the first source prefix is received through the first interface, change the state of the first security table entry to a temporary main state;
if no update instruction is received from a control plane within a first preset duration, change the state of the first security table entry to the backup state;
if an update instruction is received from the control plane within the first preset duration, change the state of the first security table entry to a main state based on the update instruction.

Optionally, the network device further comprises a second security table entry, comprising an identifier of a second interface and a second source prefix; the second security table entry corresponds to a main path to the destination terminal, and a state of the second security table entry is the main state; the machine executable instructions further cause the processor 801 to:
monitor whether the second interface receives a packet with the second source prefix;
if the second interface does not receive the packet with the second source prefix for a second preset duration, monitor whether the first interface receives the packet with the first source prefix;
wherein the second source prefix is the same with or different from the first source prefix.

Optionally, the network device further comprises a second security table entry, comprising an identifier of a second interface and a second source prefix, wherein the second security table entry corresponds to a main path to the destination terminal, and a state of the second security table entry is a main state; the machine executable instructions further cause the processor 801 to:
if a link failure is detected between the second interface and a previous hop network device in the main path, change the state of the first security table entry to the main state, and change the state of the second security table entry to the backup state.

Optionally, the first security table entry comprises a main and backup state field, a value of the main and backup state field of the first security table entry is a first value by default, and the first value is to represent the backup state.

Optionally, the second security table entry comprises a main and backup state field, a value of the main and backup state field of the second security table entry is a second value by default, and the second value is to represent the main state.

In Figure 8, a communication bus 803 can also be included. The processor 801, the machine readable storage medium 802, and the transceiver 804 communicate with each other through the communication bus 803, which can be a Peripheral Component Interconnect (PCI) bus or an Extended Industry Standard Architecture (EISA) bus. The communication bus can be divided into address bus, data bus, control bus, etc.

The transceiver 804 can be a wireless communication module, and under the control of the processor 801, can perform data interaction with other devices.

The machine readable storage medium 802 may include a Random Access Memory (RAM) or a Non-Volatile Memory (NVM), such as at least one disk storage. In addition, the machine readable storage medium 802 can also be at least one storage device located remotely from the aforementioned processor.

The processor 801 can be a general-purpose processor, including a Central Processing Unit (CPU), a Network Processor (NP), etc. It can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

In another example provided in the present disclosure, a computer readable storage medium is also provided, having stored therein a computer program that, when executed by a processor, causes the processor to carry out any method for security table entry switching described above.

In another example provided in the present disclosure, a computer program product containing instructions is also provided which, when running on a computer, causes the computer to perform any method for security table entry switching in the above example.

In the above examples, it can be fully or partially implemented through software, hardware, firmware, or any combination thereof. When implemented using software, it can be fully or partially implemented in the form of computer program products. The computer program product includes one or more computer instructions. When loading and executing the computer program instructions on a computer, all or part of the processes or functions described in the examples of the present disclosure are generated. The computer can be a general-purpose computer, a specialized computer, a computer network, or other programmable devices. The computer instructions can be stored in a computer readable storage medium or transmitted from one computer readable storage medium to another, for example, the computer instructions can be transmitted from a website, a computer, a server or a data center to another website site, computer, server or data center through wired (such as a coaxial cable, a fiber optic, a digital subscriber line (DSL)) or wireless (such as infrared, wireless, microwave, etc.) methods. The computer-readable storage medium can be any available medium that the computer can access, or a data storage device such as a server or a data center integrated with one or more available media. The available media can be magnetic media (such as floppy disks, hard drives, magnetic tapes), optical media (such as DVD), or semiconductor media (such as solid state hard drives (SSD)), etc.

It should be noted that in this article, relational terms such as first and second are only to distinguish one entity or operation from another entity or operation, and do not necessarily require or imply any actual relationship or order between these entities or operations. Moreover, the terms "include", "contain", or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "including one..." do not exclude the existence of other identical elements in the process, method, item, or device that includes the elements.

Each example of the present description is described in a relevant manner, and references can be made to each other for the same and similar parts of each example, and each example highlights the differences from other example. Especially for apparatus examples, since they are basically similar to method examples, the description is relatively simple. Please refer to the partial explanation of method examples for relevant details.

The above are only preferred examples of the present disclosure and are not intended to limit the present disclosure. Any modifications, equivalent substitutions, improvements, etc. made within the spirit and principles of the present disclosure should be included within the protection scope of the present disclosure.

## Claims

1. A method for security table entry switching, which is applied to a data plane of a network device, wherein the network device comprises a first security table entry, comprising an identifier of a first interface and a first source prefix; the first security table entry corresponds to a backup path to a destination terminal, and a state of the first security table entry is a backup state; the method comprises:
in response to determining that a packet with the first source prefix is received through the first interface, changing the state of the first security table entry to a temporary main state;
in response to determining that no update instruction is received from a control plane within a first preset duration, changing the state of the first security table entry to the backup state;
in response to determining that an update instruction is received from the control plane within the first preset duration, changing the state of the first security table entry to a main state based on the update instruction.

2. The method according to claim 1, wherein the network device further comprises a second security table entry, comprising an identifier of a second interface and a second source prefix; the second security table entry corresponds to a main path to the destination terminal, and a state of the second security table entry is the main state; before changing the state of the first security table entry to the temporary main state in response to determining that the packet with the first source prefix is received through the first interface, the method further comprises:
monitoring whether the second interface receives a packet with the second source prefix;
in response to determining that the second interface does not receive the packet with the second source prefix for a second preset duration, monitoring whether the first interface receives the packet with the first source prefix;
wherein the second source prefix is the same with or different from the first source prefix.

3. The method according to claim 1, wherein the network device further comprises a second security table entry, comprising an identifier of a second interface and a second source prefix, wherein the second security table entry corresponds to a main path to the destination terminal, and a state of the second security table entry is a main state; the method further comprises:
in response to determining that a link failure is detected between the second interface and a previous hop network device in the main path, changing the state of the first security table entry to the main state, and changing the state of the second security table entry to the backup state.

4. The method according to claim 1, wherein the first security table entry comprises a main and backup state field, a value of the main and backup state field of the first security table entry is a first value by default, and the first value is to represent the backup state.

5. The method according to claim 2 or 3, wherein the second security table entry comprises a main and backup state field, a value of the main and backup state field of the second security table entry is a second value by default, and the second value is to represent the main state.

6. An apparatus for security table entry switching, which is applied to a data plane of a network device, wherein the network device comprises a first security table entry, comprising an identifier of a first interface and a first source prefix; the first security table entry corresponds to a backup path to a destination terminal, and a state of the first security table entry is a backup state; the apparatus comprises:
a changing module to: in response to determining that a packet with the first source prefix is received through the first interface, change the state of the first security table entry to a temporary main state;
wherein, the changing module is further to: in response to determining that no update instruction is received from a control plane within a first preset duration, change the state of the first security table entry to the backup state;
the changing module is further to: in response to determining that an update instruction is received from the control plane within the first preset duration, change the state of the first security table entry to a main state based on the update instruction.

7. The apparatus according to claim 6, wherein the network device further comprises a second security table entry, comprising an identifier of a second interface and a second source prefix; the second security table entry corresponds to a main path to the destination terminal, and a state of the second security table entry is the main state; the apparatus further comprises a monitoring module;
the monitoring module is to monitor whether the second interface receives a packet with the second source prefix; and in response to determining that the second interface does not receive the packet with the second source prefix for a second preset duration, monitor whether the first interface receives the packet with the first source prefix;
wherein, the second source prefix is the same with or different from the first source prefix.

8. The apparatus according to claim 6, wherein the network device further comprises a second security table entry, comprising an identifier of a second interface and a second source prefix, wherein the second security table entry corresponds to a main path to the destination terminal, and a state of the second security table entry is a main state;
the changing module is further to: in response to determining that a link failure is detected between the second interface and a previous hop network device in the main path, change the state of the first security table entry to the main state, and change the state of the second security table entry to the backup state.

9. The apparatus according to claim 6, wherein the first security table entry comprises a main and backup state field, a value of the main and backup state field of the first security table entry is a first value by default, and the first value is to represent the backup state.

10. The apparatus according to claim 7 or 8, wherein the second security table entry comprises a main and backup state field, a value of the main and backup state field of the second security table entry is a second value by default, and the second value is to represent the main state.

11. A network device comprising a first security table entry, wherein the first security table entry comprises an identifier of a first interface and a first source prefix; the first security table entry corresponds to a backup path to a destination terminal, and a state of the first security table entry is a backup state; the network device comprises:
a processor;
a transceiver;
a machine readable storage medium having stored therein machine executable instructions that can be executed by the processor; wherein the machine executable instructions cause the processor to:
in response to determining that a packet with the first source prefix is received through the first interface, change the state of the first security table entry to a temporary main state;
in response to determining that no update instruction is received from a control plane within a first preset duration, change the state of the first security table entry to the backup state;
in response to determining that an update instruction is received from the control plane within the first preset duration, change the state of the first security table entry to a main state based on the update instruction.

12. The network device according to claim 11, wherein the network device further comprises a second security table entry, comprising an identifier of a second interface and a second source prefix; the second security table entry corresponds to a main path to the destination terminal, and a state of the second security table entry is the main state; the machine executable instructions further cause the processor to:
monitor whether the second interface receives a packet with the second source prefix;
in response to determining that the second interface does not receive the packet with the second source prefix for a second preset duration, monitor whether the first interface receives the packet with the first source prefix;
wherein the second source prefix is the same with or different from the first source prefix.

13. The network device according to claim 11, wherein the network device further comprises a second security table entry, comprising an identifier of a second interface and a second source prefix, wherein the second security table entry corresponds to a main path to the destination terminal, and a state of the second security table entry is a main state; the machine executable instructions further cause the processor to:
in response to determining that a link failure is detected between the second interface and a previous hop network device in the main path, change the state of the first security table entry to the main state, and change the state of the second security table entry to the backup state.

14. The network device according to claim 11, wherein the first security table entry comprises a main and backup state field, a value of the main and backup state field of the first security table entry is a first value by default, and the first value is to represent the backup state.

15. The network device according to claim 12 or 13, wherein the second security table entry comprises a main and backup state field, a value of the main and backup state field of the second security table entry is a second value by default, and the second value is to represent the main state.

16. A machine readable storage medium having stored therein machine executable instructions that, when called and executed by a processor, cause the processor to carry out the method according to any one of claims 1-5.

17. A computer program product, which causes a processor to carry out the method according to any one of claims 1-5.
